Europäisches Patentamt

European Patent Office

Office européen des brevets

(19)

(11) **EP 0 869 358 A1**

(12) **DEMANDE DE BREVET EUROPEEN**

(43) Date de publication:
**07.10.1998 Bulletin 1998/41**

(51) Int Cl.$^6$: **G01N 29/14**

(21) Numéro de dépôt: **98450002.5**

(22) Date de dépôt: **30.03.1998**

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **02.04.1997 FR 9704300**

(71) Demandeur: **AEROSPATIALE SOCIETE NATIONALE INDUSTRIELLE, Société Anonyme 75781 Paris Cedex 16 (FR)**

(72) Inventeurs:
- **Anifrani, Jean-Charles**
  **33160 Saint Medard en Jalles (FR)**
- **Le Floc'h, Christian**
  **33290 Blanquefort (FR)**

(74) Mandataire: **Thébault, Jean-Louis**
  **Cabinet Thébault**
  **111 cours du Médoc**
  **33300 Bordeaux (FR)**

(54) **Procédé de determination predictive en regime pre-critique de la charge à rupture d'une structure**

(57) L'objet de l'invention est un procédé de détermination prédictive en régime pré-critique de la charge à rupture d'une structure, dans lequel on soumet ladite structure à une sollicitation du même type que la charge et dépendant du temps selon une loi prédéfinie, tout en enregistrant l'activité acoustique générée par les endommagements subis, jusqu'à un seuil de sollicitation prédéterminé, caractérisé en ce que l'on effectue une corrélation entre l'émission acoustique enregistrée et la relation :

$$\frac{dE}{dt} \sim \left( th[\frac{t_r - t}{\Delta}] \right)^{-\alpha} \left[ 1 + C \cos \frac{2\pi}{\log \lambda} \left( \log(th[\frac{t_r - t}{\Delta}]) + \varnothing \right) \right]$$

dans laquelle :

$\frac{dE}{dt}$ est la variation d'énergie acoustique générée par lesdits endommagements,
$t$ est le temps,
$t_r$ est l'instant de rupture,
$\Delta$, $\alpha$, $C$, $\lambda$, et $\varnothing$ sont des coefficients,

afin de déterminer la valeur de prédiction de la charge à rupture à partir de la loi préétablie liant le temps à ladite charge.

Printed by Jouve, 75001 PARIS (FR)

FIG. UNIQUE

**Description**

La présente invention a trait à la prédiction avant rupture de la charge à rupture d'une structure.

Par structure, on entend un corps matériel fini, homogène ou hétérogène, conçu pour affronter des sollicitations physiques déterminées qu'on appellera charge, simple ou combinée, l'invention visant à prédire la limite de résistance dudit corps vis à vis de ladite charge.

Bien que l'invention soit susceptible d'applications à bien des types de structures, elle sera décrite dans son application au contrôle de réservoirs de stockage de gaz sous haute pression et plus particulièrement encore au contrôle de réservoirs réalisés en matériau composite bobiné sur liner métallique.

De tels réservoirs, généralement sphériques, destinés à supporter des pressions internes pouvant atteindre ou dépasser 800 bars, sont soumis à des contrôles non destructifs parmi lesquels le contrôle par émission acoustique.

Cette technique, qui vise à contrôler la bonne santé du métal et du matériau composite, consiste à soumettre le réservoir à tester à une contrainte de pression déterminée, laquelle provoque dans les matériaux des endommagements microscopiques irréversibles dont l'apparition libère de l'énergie sous forme thermique et acoustique. Seule l'énergie acoustique, qui est le plus facilement exploitable, est détectée à l'aide de capteurs piézoélectriques et permet de déceler tout défaut évolutif.

Ainsi, au cours d'un cycle d'essai par une montée monotone croissante de la pression jusqu'à une pression maximale prédéterminée, typiquement la pression de timbrage, c'est à dire 1,5 fois la pression de service dudit réservoir, on enregistre les émissions acoustiques.

L'exploitation de ces émissions acoustiques permet à partir de critères préétablis de déclarer le réservoir apte ou inapte à remplir sa mission.

Il est évident que cette technique, si elle permet de détecter, voire de localiser, dans le réservoir sous essai des défauts, ne donne aucune indication sur la valeur effective de la pression à rupture, nécessairement bien au-delà de la pression de timbrage.

A ce jour, il n'existe pas de contrôle quantifiant pour chaque réservoir le niveau prévisionnel de pression à rupture, ce qui oblige, par souci de fiabilité, à appliquer des coefficients de sécurité conduisant inévitablement à des surdimensionnements. Or, ces surdimensionnements entraînent, en particulier pour des structures en matériaux coûteux, telles que les réservoirs évoqués plus haut, à vocation aéronautique ou spatiale, des augmentations de poids et de coût préjudiciables.

Afin de réduire ces surdimensionnements tout en renforçant la sécurité d'emploi de telles structures, la Demanderesse a déjà proposé dans le document FR-A-2 715 731, une technique non destructrice d'évaluation précise individuelle de chaque structure de sa limite effective de résistance aux sollicitations qu'elle doit affronter et en considération desquelles elle a été conçue et réalisée.

Dans le domaine de la tenue en pression de structures telles que des réservoirs en matériau composite bobiné sur un liner métallique, on distingue d'une manière générale trois régimes couvrant une montée en pression monotone depuis zéro jusqu'à la rupture de la structure, intervenant à la pression de rupture dite Pr.

Jusqu'à une valeur de pression, très approximativement fixée à 0,7 Pr, se situe un régime dit diffus où ne se manifestent pas dans la structure sous test d'interactions ou corrélations entre d'éventuels endommagements, en sorte qu'aucune loi ne peut être établie, liant de tels endommagements, ce qui rend impossible toute prédiction de la valeur Pr.

Au delà de ce premier régime et jusqu'à une valeur, également approximative, de 0,95 Pr, s'établit un second régime, dit pré-critique, dans lequel apparaissent des interactions entre endommagements, ayant une cohérence spatiale et temporelle. C'est le début d'un processus dit coopératif.

Enfin, au delà de ce régime pré-critique et jusqu'à la rupture de la structure, s'établit un troisième régime dit critique, où les interactions entre endommagements se généralisent et, par ledit processus coopératif, conduisent à la destruction de la structure.

Dans FR-A-2 715 731 est décrit un procédé de détermination prédictive de la charge à rupture utilisant une loi de puissance prenant en compte les corrélations entre endommagements mais essentiellement lorsque ces derniers sont dans le processus totalement coopératif conduisant à la rupture. Autrement dit, le procédé ne peut fournir des données réellement pertinentes et fiables quant à la charge à rupture de la structure sous test que dans le régime dit critique, ce qui oblige à porter la pression d'essai de la structure dans une région proche de la pression de rupture.

Or, ceci peut entraîner une dégradation de la pression de rupture Pr du fait que l'atteinte d'une pression d'essai relativement proche de Pr est susceptible de provoquer des endommagements fragilisant la structure, c'est à dire ayant des conséquences sur la tenue en pression, en clair abaissant la valeur Pr.

Il est donc souhaitable de réduire autant que possible la pression maximale d'essai de chaque structure.

C'est précisément le but de la présente invention de proposer un procédé de détermination prédictive de la charge à rupture à la fois fiable et avec un degré de confiance optimal et plus précisément de proposer un procédé mettant en oeuvre des pressions d'essai cantonnées dans le régime pré-critique.

A cet effet, l'invention a pour objet un procédé de détermination prédictive en régime pré-critique de la charge à rupture d'une structure, dans lequel on soumet ladite structure à une sollicitation du même type que la charge et dépendant du temps selon une loi prédéfinie, tout en enregistrant l'activité acoustique générée par les endommagements subis, jusqu'à un seuil de sollicitation prédéterminé, caractérisé en ce que l'on effectue une corrélation entre l'émission acoustique enregistrée et la relation :

$$\frac{dE}{dt} \sim \left( th[\frac{t_r - t}{\Delta}] \right)^{-\alpha} \left[ 1 + C \cos \frac{2\pi}{\log \lambda} \left( \log(th[\frac{t_r - t}{\Delta}]) + \varnothing \right) \right]$$

dans laquelle :

$\frac{dE}{dt}$ est la variation d'énergie acoustique générée par lesdits endommagements,
t est le temps,
$t_r$ est l'instant de rupture,
$\Delta$, $\alpha$, C, $\lambda$ et $\varnothing$ sont des coefficients,

afin de déterminer la valeur de prédiction de la charge à rupture à partir de la loi préétablie liant le temps à ladite charge.

Dans son application à une structure constituée par un réservoir en un matériau composite bobiné sur liner métallique, le procédé est par exemple mis en oeuvre en portant le réservoir à une pression interne d'épreuve selon un protocole déterminé.

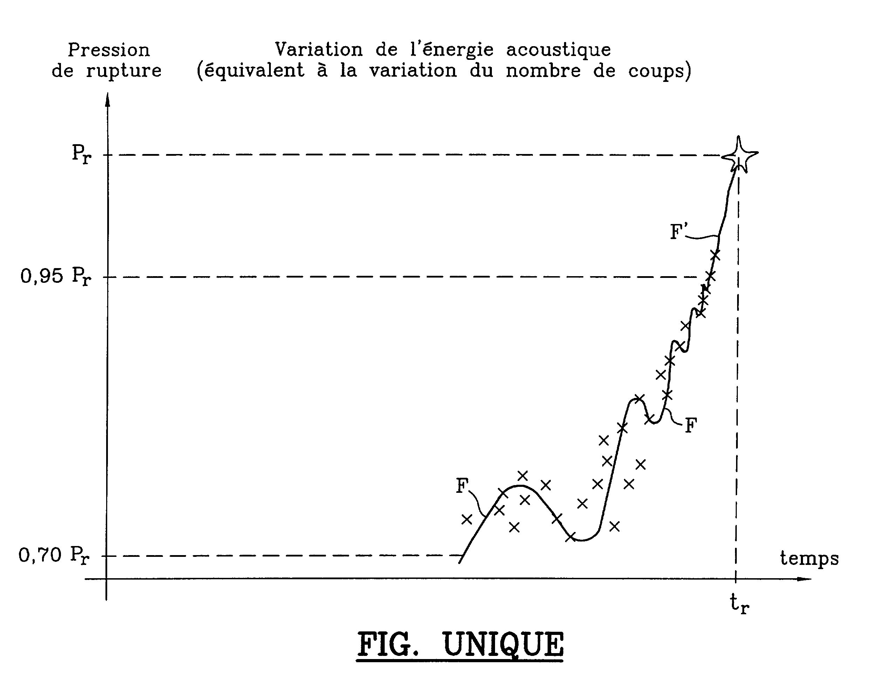

On va maintenant décrire plus en détail le procédé de l'invention en se reportant au dessin annexé sur lequel la figure unique représente la variation dans le temps exprimée en nombre de coups de l'énergie acoustique engendrée lors d'une mise en pression d'un réservoir.

Le procédé de l'invention consiste à soumettre par exemple un réservoir de stockage de gaz sous haute pression devant équiper un satellite, du type en matériau composite bobiné sur un liner métallique, à une montée en charge dépendant du temps selon une loi prédéfinie, tout en enregistrant l'activité acoustique générée par les endommagements subis, jusqu'à un seuil de pression déterminé, inférieur à la pression de rupture.

Les moyens de mise en oeuvre du procédé sont strictement similaires à ceux décrits dans FR-A-2 715 731. Le réservoir, par exemple sphérique, est ceinturé au niveau de l'équateur d'une chaîne de capteurs piézoélectriques reliée à un dispositif d'enregistrement de l'émission acoustique comprenant par exemple un système d'acquisition de l'émission acoustique du type LOCAN AT de la société EURO PHYSICAL ACOUSTICS.

Le protocole de montée en pression, enregistrement de l'émission acoustique, seuillage des événements, cumul des coups ou dépassements de seuil de l'énergie acoustique dissipée, est similaire à celui décrit dans FR-A-2 715 731.

Sur la figure unique, on a illustré l'évolution en fonction du temps de la variation d'énergie $\frac{dE}{dt}$ engendrée par les émissions acoustiques, ladite évolution étant présentée sous forme d'une couche obtenue à partir de la valeur cumulée en nombre de coups de l'énergie acoustique dissipée en fonction du temps au fur et à mesure du processus conduisant à la rupture, tr étant le temps de rupture du réservoir.

Les croix représentent les dépassements de seuil ou coups et se distribuent de manière, apparemment, d'autant plus désordonnée que l'on se trouve loin de la rupture.

Ce désordre n'est qu'apparent, car il a pu être établi, conformément à l'invention, que lesdits coups s'ordonnaient de manière optimale selon la relation à partir du régime pré-critique :

$$\frac{dE}{dt} \sim \left( th[\frac{t_r - t}{\Delta}] \right)^{-\alpha} \left[ 1 + C \cos \frac{2\pi}{\log \lambda} \left( \log(th[\frac{t_r - t}{\Delta}]) + \varnothing \right) \right]$$

dans laquelle :

$\frac{dE}{dt}$ est la variation d'énergie acoustique générée par lesdits endommagements,
t est le temps,
$t_r$ est l'instant de rupture,
$\Delta$, $\alpha$, C, $\lambda$ et $\varnothing$ sont des coefficients.

Dès lors, par un processus d'ajustement entre théorie et expérience dénommé plus précisément "fittage" entre lesdits coups et la relation ci-dessus, on peut déterminer les six paramètres de cette dernière, à savoir $\Delta$, C, $\varnothing$, $\lambda$, $\alpha$ et $t_r$. Les cinq premiers paramètres sont des coefficients, le dernier, $t_r$, permettant, à partir de la dite loi préétablie liant le temps à la charge appliquée au réservoir, de prédire la charge à rupture de ce dernier.

Parmi lesdits coefficients, $\lambda$ est un réel positif proche de 2 et $\varnothing$ est un coefficient de déphasage.

Sur la figure, on a représenté en F la fonction tangente hyperbolique selon la relation ci-dessus, qui "colle" au plus près des coups enregistrés.

Il est à noter que dans la relation ci-dessus lorsque $\Delta$ tend vers l'infini, ladite relation se transforme en loi de puissance pure et plus précisément la loi de puissance décrite dans FR-A-2 715 731. Ceci est illustré sur la figure par la partie sensiblement rectiligne F' de la courbe F, faisant la transition entre la partie sinueuse de la courbe, prenant en compte le caractère oscillatoire de l'évolution des coups, et le point de rupture.

La partie F' correspond au régime critique défini plus haut, dans la plage comprise entre 0,95 Pr et Pr, alors que la partie de la courbe F en deçà de 0,95 Pr correspond au régime pré-critique.

La loi de puissance décrite dans FR-A-2 715 731 constitue donc un cas limite de celle décrite dans la présente demande.

L'intérêt majeur de la présente relation utilisant une fonction tangente hyperbolique apparaît clairement sur la figure. Il suffit de conduire la montée en pression en demeurant en deçà de la valeur 0,95 Pr, c'est à dire, de rester en régime précritique, pour avoir suffisamment d'informations pour déterminer la courbe F.

La valeur de prédiction de Pr du réservoir en essai sera ainsi déterminée avec une probabilité et un indice de confiance aussi grands qu'en utilisant la relation de FR-A-2 715 731, mais en évitant de porter le réservoir en régime critique.

Il reste néanmoins que plus la pression maximale d'essai se rapprochera de la valeur 0,95 Pr, plus grande sera la fiabilité de la prédiction et, qu'à l'inverse, il ne sera pas souhaitable de trop abaisser ladite pression maximale d'essai.

A ce propos, il s'est avéré que le coefficient $\Delta$, qui est homogène à un temps, constituait un critère de confiance déterminant en ce sens qu'il fixe en quelque sorte l'étendue du champ de prédictivité au delà duquel l'incertitude est trop grande, voire totale.

C'est ainsi que $\Delta$ doit être de préférence supérieur à $t_r$-$t_p$, $t_p$ étant le temps dit de prédiction, correspondant à l'arrêt de la montée en pression du réservoir en essai.

Si $\Delta$ est inférieur à $t_r$-$t_p$, le "fittage" entre les enregistrements des variations d'énergie acoustique et la relation tangente hyperbolique exposée plus haut est trop imprécis et conduit donc à une prédiction trop aléatoire.

Il conviendra donc en outre pour chaque test de vérifier la relation $\Delta \geq t_r$-$t_p$. Cette dernière relation fixe ainsi le seuil inférieur de la pression maximale d'essai. Ce seuil fixé à titre d'illustration à 0,70 Pr dans l'exemple de la figure, constitue la borne inférieure du régime pré-critique, mais peut être cependant très variable selon notamment les conditions de fabrication du réservoir.

Enfin, l'invention s'applique à toute structure soumise à une pression, interne ou externe, et d'une manière générale à toute structure soumise à des sollicitations ou charges mécaniques, par exemple pales d'hélicoptères, voilures, etc, étant entendu que la sollicitation à des fins d'écoute acoustique appliquée conformément au procédé de l'invention est de même nature que celle pour laquelle la structure est conçue.

Il est à noter à ce propos que la mise en oeuvre du procédé de l'invention ne nécessite pas la connaissance de la forme, des dimensions ou des caractéristiques des matériaux de la structure et que c'est précisément ce caractère universaliste qui permet l'application dudit procédé à d'autres structures que celles d'un réservoir.

**Revendications**

1. Procédé de détermination prédictive en régime pré-critique de la charge à rupture d'une structure, dans lequel on soumet ladite structure à une sollicitation du même type que la charge et dépendant du temps selon une loi prédéfinie, tout en enregistrant l'activité acoustique générée par les endommagements subis, jusqu'à un seuil de sollicitation prédéterminé, caractérisé en ce que l'on effectue une corrélation entre l'émission acoustique enregistrée et la relation :

$$\frac{dE}{dt} \sim \left( th[\frac{t_r - t}{\Delta}] \right)^{-\alpha} \left[ 1 + C \cos \frac{2\pi}{\log \lambda} \left( \log(th[\frac{t_r - t}{\Delta}]) + \varnothing \right) \right]$$

dans laquelle :

$\frac{dE}{dt}$ est la variation d'énergie acoustique générée par lesdits endommagements,

t est le temps,

$t_r$ est l'instant de rupture,

$\Delta$, $\alpha$, C, $\lambda$ et $\varnothing$ sont des coefficients,

afin de déterminer la valeur de prédiction de la charge à rupture à partir de la loi préétablie liant le temps à ladite charge.

2. Procédé suivant la revendication 1, caractérisé en ce qu'en outre ledit coefficient $\Delta$ satisfait à la relation : $\Delta \geq t_r$-$t_p$ dans laquelle $t_p$ est le temps d'arrêt de la sollicitation appliquée.

3. Procédé suivant la revendication 1 ou 2, appliqué à un réservoir en matériau composite bobiné sur liner, caractérisé en ce que la sollicitation est une pression d'épreuve appliquée au réservoir selon un protocole déterminé.

4. Procédé suivant la revendication 3, caractérisé en ce que ladite pression d'épreuve est une pression monotone croissant jusqu'audit seuil de sollicitation prédéterminé.

5. Procédé suivant l'une des revendications 1 à 4, caractérisé en ce que ledit seuil de sollicitation prédéterminé est égale à 0,95 fois la charge à rupture.

6. Procédé suivant l'une des revendications 1 à 5, caractérisé en ce que le seuil minimal de la sollicitation appliquée est égal à 0,70 fois la charge à rupture.

FIG. UNIQUE

| | Office européen des brevets | **RAPPORT DE RECHERCHE EUROPEENNE** | Numero de la demande<br>EP 98 45 0002 |

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int.Cl.6) |
|---|---|---|---|
| D,A | EP 0 665 432 A (AEROSPATIALE) 2 août 1995<br>* colonne 4, ligne 6 - colonne 5, ligne 50 * | 1 | G01N29/14 |
| A | US 4 732 045 A (BLACKBURN PHILIP R) 22 mars 1988<br>* le document en entier * | 1 | |
| A | US 4 577 487 A (DOOLEY JOHN G) 25 mars 1986<br>* colonne 3, ligne 8 - colonne 5, ligne 9 * | 1 | |

| DOMAINES TECHNIQUES RECHERCHES (Int.Cl.6) |
|---|
| G01N |

Le present rapport a ete etabli pour toutes les revendications

| Lieu de la recherche | Date d'achevement de la recherche | Examinateur |
|---|---|---|
| LA HAYE | i juillet 1998 | Kouzelis, D |

CATEGORIE DES DOCUMENTS CITES

X : particulièrement pertinent à lui seul
Y : particulièrement pertinent en combinaison avec un autre document de la même categorie
A : arrière-plan technologique
O : divulgation non-ecrite
P : document intercalaire

T : theorie ou principe à la base de l'invention
E : document de brevet anterieur, mais publié à la date de depôt ou apres cette date
D : cité dans la demande
L : cité pour d'autres raisons

& : membre de la même famille, document correspondant

EPO FORM 1503 03.82 (P04C02)